# EUROPÄISCHE PATENTSCHRIFT

(11) **EP 1 276 212 B1**
(45) Veröffentlichungstag und Bekanntmachung des Hinweises auf die Patenterteilung: **15.02.2012**
(21) Anmeldenummer: 02015269.0
(22) Anmeldetag: 09.07.2002
(51) Int. Cl.: H02K 21/16, H02K 1/27

(54) **Synchronmaschine**
Synchronous machine
Machine synchrone

(30) Priorität: 11.07.2001 DE 10133654
(43) Veröffentlichungstag der Anmeldung: 15.01.2003
(73) Patentinhaber: SIEMENS AKTIENGESELLSCHAFT, 80333 München (DE)
(72) Erfinder: Vollmer, Rolf, 36129 Gersfeld (DE)

(56) Entgegenhaltungen:
- EP-A- 0 514 176
- EP-A- 0 740 405
- GB-A- 2 271 672
- US-A- 5 532 531
- US-A- 6 013 962
- US-A- 6 133 663
- PATENT ABSTRACTS OF JAPAN Bd. 016, Nr. 091 (E-1174), 5. März 1992 (1992-03-05) & JP 03 273841 A (ISUZU MOTORS LTD), 5. Dezember 1991 (1991-12-05)
- PATENT ABSTRACTS OF JAPAN Bd. 006, Nr. 053 (P-109), 8. April 1982 (1982-04-08) & JP 56 168163 A (MITSUBISHI ELECTRIC CORP), 24. Dezember 1981 (1981-12-24)

## Beschreibung

Die Erfindung betrifft eine elektrische Synchronmaschine.

Elektrische Synchronmaschinen mit Erregung durch Permanentmagnete weisen gegenüber elektrisch erregten Synchronmaschinen Vorteile auf. Vor allem bei Speisung über Stromrichter lassen sich sehr einfach aufgebaute Synchronmaschinen anwenden, die mit geringer Polteilung und kleinen Eisenmassen ausgestattet werden können. Der Wirkungsgrad dieser Maschinen liegt höher als von elektrisch erregten Synchronmaschinen. Eine solche elektrische Maschine ist aus US 6 133 663 bekannt. Permanentmagnete mit hoher Energiedichte, d.h. großes Produkt aus Flussdichte und Feldstärke, erweisen sich dabei den weniger energiestarken Magneten überlegen. Es ist bekannt, dass Permanentmagnete nicht nur in der Form der direkten Zuordnung zum Nutzspalt, d.h. in einer flachen Anordnung, sondern auch in einer Art Sammlerkonfiguration (Flusskonzentration) zur Anwendung kommen.

Direkte Zuordnung zum Nutzspalt bedeutet, dass die Flussdichte des Magneten etwa gleich jener des Nutzspaltes ist. Dies gilt zumindest solange wie der Nutzspalt im Verhältnis zur Magnethöhe klein ist. Die Flusskonzentrationsanordnung lässt im Nutzspalt größere Flussdichten als im Magnet zu. Dies wird durch eine großflächige Magnetanordnung erreicht. Die Querschnittsfläche des Magnetes ist größer als die Polfläche im Nutzspalt. Dementsprechend ist die Flussdichte im Magnet geringer als die im Polbereich.

Der Erfindung liegt die Aufgabe zugrunde, eine elektrische Synchronmaschine zu schaffen, die eine erhöhte Drehmomentausnutzung gegenüber vergleichbaren Synchronmaschinen aufweist.

Die Lösung der gestellten Aufgabe gelingt durch eine elektrische Synchronmaschine mit einem Stator und einem Rotor, wobei der Stator vorzugsweise eine 3-phasige Drehstromwicklung mit einer mittleren Spulenweite τsp aufweist und der Rotor mit Permanentmagneten versehen ist, wobei der Rotor die Polpaarzahl 2p mit der Polteilungsweite τp aufweist und sich ein Teilungsverhältnis τsp/τp von > 2,5 ergibt.

Durch die Vergrößerung des Verhältnisses Spulenweite zu Polteilungs τsp zu τp nimmt die Induktion im Statoreisen ab. Demzufolge kann die radiale Höhe des Statoreisen reduziert werden, so daß Einbauhöhe gewonnen wurde.

Durch einen Rotor, dessen Permanentmagnete in Flusskonzentration angeordnet sind, wird außerdem die Luftspaltinduktion auf deutlich über ein Tesla angehoben, ohne dass das Statoreisen in Sättigung gerät. Damit sind Luftspaltinduktionen erreichbar, die etwa dem Doppelten der bekannten elektrischen Synchronmaschinen entsprechen.

Es tritt damit vorteilhafterweise eine Steigerung des thermischen Drehmoments gegenüber herkömmlichen Synchronmaschinen ein. Wobei unter thermischen Drehmoment, das bei einer vorgegebenen Temperatur maximal abzugebende Dauerdrehmoment zu verstehen ist.

Es wird somit eine Steigerung des Wirkungsgrades herbeigeführt, ebenso wie eine Steigerung des maximalen Drehmoments. Die Ausnutzung der Maschine (Nm/kg) wird etwa um den Faktor 2 gegenüber herkömmlichen elektrischen Synchronmaschinen gesteigert. Es stellt sich außerdem aufgrund der geringeren Masse eine Steigerung des Beschleunigungsvermögens ein.

Weitere Vorteile und Anwendungen sind den Unteransprüchen zu entnehmen.

Die Erfindung sowie weitere Ausgestaltungen der Erfindung ist dem beiliegenden schematisch dargestellten Ausführungsbeispiel zu entnehmen. Darin zeigt:
- FIG 1: Querschnitt einer Synchronmaschine,
- FIG 2: Magnetverlauf innerhalb einer Synchronmaschine,
- FIG 3,4: Ausführungsformen zur Fixierung der Permanentmagnete,
- FIG 5: weitere Ausführungsform der Flußkonzentration der Permanentmagnete,
- FIG 6: Außenläufermotor mit der erfindungsgemäßen Ausgestaltung

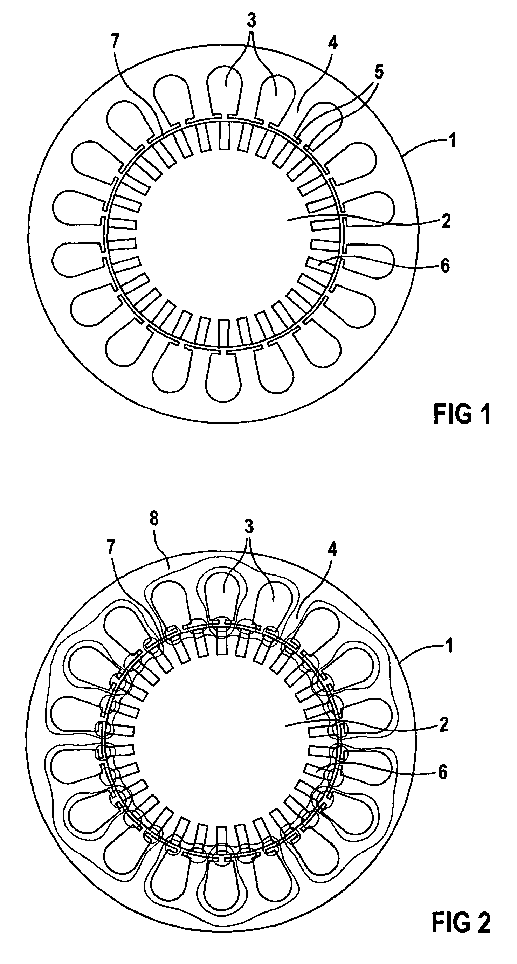

FIG 1 zeigt im Querschnitt eine nicht näher dargestellte erfindungsgemäße elektrische Synchronmaschine. Dabei ist der Stator 1 und der Rotor 2 im Querschnitt dargestellt. Der Stator 1 zeigt einzelne Nuten 3, die durch Zähne 4 voneinander getrennt sind. Die Zähne 4 sind in Richtung des Luftspalts der elektrischen Synchronmaschine durch Zahnerweiterungen 5 verbreitert. Die nicht näher dargestellten Wicklungen sind in den Nuten 3 untergebracht. Der Rotor 2 zeigt Permanentmagnete 6, die in Flusskonzentrationsrichtung angeordnet sind. Unter Flusskonzentrationsanordnung wird dabei die Anordnung der Permanentmagnete 6 verstanden, die so gestaltet ist, dass innerhalb des Luftspaltes 7 der elektrischen Synchronmaschine eine maximale Feldliniendichte vorhanden ist.

Die Wicklungen sind nicht notwendigerweise als Zahnspulen ausgeführt, die jeweils nur einen Zahn 4 umgeben. Es sind sämtliche aus dem Stand der Technik bekannten Wicklungsarten und -systeme einsetzbar, wie z.B. gesehnte Wicklungen, Zweischichtwicklungen etc.

Bei einer Standardwicklung mit einer Nutenzahl von 18 im Ständer und einer Polpaarzahl von 6 ergibt sich bei einem 6-poligen Läufer die Lochzahl mit q = 1. Bei einer Polpaarzahl von 2p = 30 ergibt sich eine Bruchlochwicklung mit der Lochzahl von q = 0,2.

FIG 2 zeigt den Magnetverlauf einer in Betrieb befindlichen elektrischen Synchronmaschine. Erfindungsgemäß konzentriert sich dabei, die Luftspaltinduktion sich auf die den Luftspalt 7 umgebende Bereiche. (Flußkonzentration). Demzufolge kann vorteilhafterweise im Stator 1 der elektrischen Synchronmaschine die Jochhöhe 8 reduziert werden. Damit erhält man geringere Einbaugrößen bei verbessertem Drehmomentenverhalten und maximalem Drehmoment.

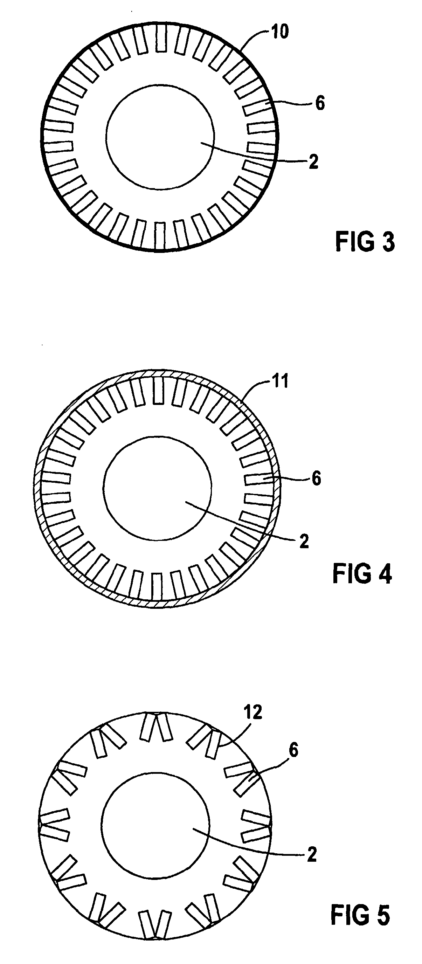

FIG 3 und 4 zeigen Möglichkeiten die Permanentmagnete 6 am Rotor 2 zu fixieren. Dies geschieht gemäß FIG 3 durch eine magnetisch leitende Bandage 10 , die den Rotor umgibt.

Ebenso ist es möglich die Permanentmagnete 6 gemäß FIG 4 durch eine Hülse 11 zu fixieren. Diese Hülse 11 wird vorzugsweise durch Schrumpftechniken auf dem Rotor 2 positioniert.

FIG 5 zeigt beispielhaft eine weitere Möglichkeit, die Permanentmagnete 6 in Flusskonzentrationsanordnung zu positionieren. Die Permanentmagnete 6 werden dabei wie in FIG 3, 4 ausgeführt positioniert oder in axiale Ausnehmungen 12 des Rotors 2 eingesetzt.

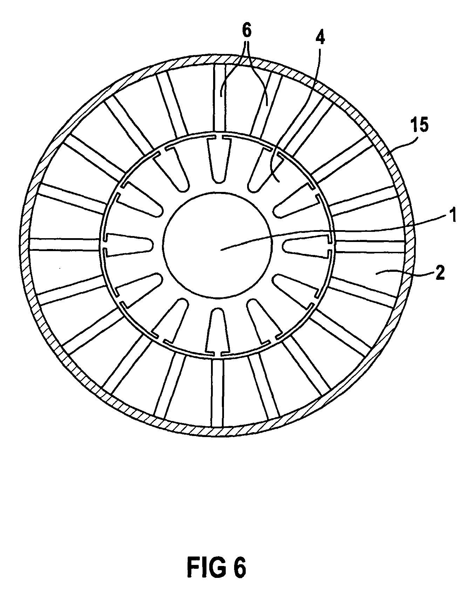

Falls die elektrische Synchronmaschine gemäß FIG 6 mit einem Außenläufer ausgeführt ist, können insbesondere durch eine amagnetische Hülse 15 oder Ring aus vorzugsweise Aluminium die Permanentmagnete 6 fixiert werden. In diesem Außenbereich ist magnetische Leitfähigkeit unerwünscht.

Insbesondere im Bereichs der Jochs der elektrischen Synchronmaschine, sind auch Kompositwerkstoffe einsetzbar, so dass der Stator 1 aus zwei unterschiedlichen magnetisch leitenden Substanzen aufgebaut ist.

Diese erfindungsgemäßen Synchronmaschinen sind bei allen Arten von Produktionsmaschinen einsetzbar, wie z.B. der Nahrungsmittelindustrie, der Textilindustrie und bei Werkzeugmaschinen. Sie sind ebenso bei Antrieben der Verkehrstechnik einsetzbar, wie z.B. Straßenbahnen oder E-Loks. Aufgrund Ihres vorteilhaften Drehmomentverhaltens sind diese Synchronmaschinen auch für Hebezeuge einsetzbar.

## Patentansprüche

1. Elektrische Synchronmaschine mit einem Stator (1) und einem Rotor (2), wobei der Stator (1) vorzugsweise eine 3-phasige Drehstromwicklung mit einer mittleren Spulenweite τsp aufweist und der Rotor (2) mit Permanentmagneten (6) versehen ist, wobei der Rotor (2) die Polpaarzahl 2p mit der Polteilungsweite τp aufweist und sich ein Teilungsverhältnis τsp/τp von > 2,5 ergibt.

2. Elektrische Synchronmaschine nach Anspruch 1, **dadurch gekennzeichnet, dass** sich das Teilungsverhältnis gemäß 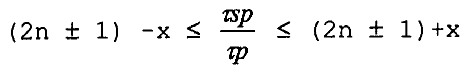 einstellt, wobei n eine ganze natürliche Zahl ≥ 2 ist, und x den Wert 0,5 hat.

3. Elektrische Synchronmaschine nach Anspruch 1 oder 2, **dadurch gekennzeichnet, dass** die Permanentmagnete (6) in Flusskonzentrationsanordnung angeordnet sind.

4. Elektrische Synchronmaschine nach einem der vorhergehenden Ansprüche, **dadurch gekennzeichnet, dass** die Feldlinien der Permanentmagnete (6) im wesentlichen tangential zum Rotor (2) verlaufen, so daß sich eine Flusskonzentration der von den Permanentmagnete (6) Feldlinien im Luftspalt der elektrischen Synchronmaschine einstellt.

5. Elektrische Synchronmaschine nach Anspruch 4, **dadurch gekennzeichnet, dass** die Permanentmagnete (6) durch Bandagen (10) und/oder magnetisch leitende Hülsen (11), die zumindest teilweise den Rotor (2) umgeben auf bzw. am Rotor (2) positioniert sind.

6. Elektrische Synchronmaschine nach Anspruch 5, **dadurch gekennzeichnet, dass** die Hülse (11) geblecht ausgeführt ist.

7. Elektrische Synchronmaschine nach Anspruch 1 bis 4, **dadurch gekennzeichnet, dass** die Permanentmagnete (6) in im wesentlichen axial verlaufenden Ausnehmungen eines einteiligen Rotors (2) einsetzbar sind.

8. Elektrische Synchronmaschine nach einem der vorhergehenden Ansprüche, **dadurch gekennzeichnet, dass** die Synchronmaschine als rotatorische Innen- oder Außenläufer oder als Linearmotor ausführbar ist.

9. Anwendung einer elektrischen Synchronmaschine nach Anspruch 1, in Werkzeugmaschinen, Produktionsmaschinen oder bei elektrischen Antrieben der Verkehrstechnik.

## Claims

1. Electric synchronous machine, having a stator (1) and a rotor (2), wherein the stator (1) preferably has a 3-phase AC winding with an average coil width τsp and the rotor (2) is provided with permanent magnets (6), wherein the rotor (2) has the pole pair number 2p with the pole pitch width τp and a pitch ratio τsp/τp of > 2.5.

2. Electric synchronous machine according to claim 1, **characterised in that** the pitch ratio is defined as 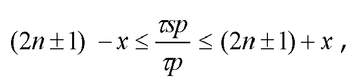 wherein n is an integer number ≥ 2, and x has the value 0.5.

3. Electric synchronous machine according to claim 1 or 2, **characterised in that** the permanent magnets (6) are arranged in a flux concentration arrangement.

4. Electric synchronous machine according to one of the preceding claims, **characterised in that** the field lines of the permanent magnets (6) extend essentially tangentially to the rotor (2), so that a flux concentration of the field lines of the permanent magnets (6) arises in the air gap of the electric synchronous machine.

5. Electric synchronous machine according to claim 4, **characterised in that** the permanent magnets (6) are positioned on or at the rotor (2) using bandages (10) and/or magnetically conducting sleeves (11) which at least partially surround the rotor (2).

6. Electric synchronous machine according to claim 5, **characterised in that** the sleeve (11) has a laminated structure.

7. Electric synchronous machine according to claim 1 to 4, **characterised in that** the permanent magnets (6) can be used in essentially axially extending recesses in a rotor (2) made as a single piece.

8. Electric synchronous machine according to one of the preceding claims, **characterised in that** the synchronous machine can be executed as a rotary internal or external rotor or as a linear motor.

9. Use of an electric synchronous machine according to claim 1, in machine tools, production machines or with electric drives in traffic engineering.

## Revendications

1. Machine électrique synchrone comprenant un stator ( 1 ) et un rotor ( 2 ), le stator ( 1 ) étant pourvu de préférence d'un enroulement à courant triphasé ayant une largeur τsp moyenne de bobine et le rotor ( 2 ) d'aimants ( 6 ) permanents, dans laquelle le rotor ( 2 ) a le nombre 2p paire de pôles ayant la largeur τp de pas polaire et il s'ensuit un rapport τsp/τp de pas supérieur à 2,5.

2. Machine électrique synchrone suivant la revendication 1, **caractérisée en ce que** le rapport de pas s'établit suivant 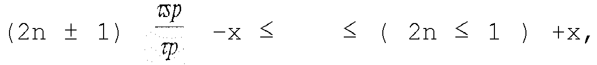 dans laquelle n est un nombre entier naturel ≥ 2 et x a la valeur 0,5.

3. Machine électrique synchrone suivant la revendication 1 ou 2, **caractérisée en ce que** les aimants ( 6 ) permanents sont disposés suivant l'agencement à concentration de flux.

4. Machine électrique synchrone suivant l'une des revendications précédentes, **caractérisée en ce que** les lignes de champ des aimants ( 6 ) permanents sont sensiblement tangentes au rotor ( 2 ) de manière à établir une concentration de flux des lignes de champ par les aimants ( 6 ) permanents dans l'entrefer de la machine électrique synchrone.

5. Machine électrique synchrone suivant la revendication 4, **caractérisée en ce que** les aimants ( 6 ) permanents sont mis en position sur ou dans le rotor ( 2 ) par des bandages ( 10 ) et/ou des manchons ( 11 ) conducteurs magnétiquement, qui entourent au moins en partie le rotor ( 2 ).

6. Machine électrique synchrone suivant la revendication 5, **caractérisée en ce que** le manchon ( 11 ) est feuilleté.

7. Machine électrique synchrone suivant la revendication 1 à 4, **caractérisée en ce que** les aimants ( 4 ) permanents peuvent être insérés dans des évidements, s'étendant sensiblement axialement, d'un rotor ( 2 ) en une seule pièce.

8. Machine électrique synchrone suivant l'une des revendications précédentes, **caractérisée en ce que** la machine synchrone peut être réalisée sous la forme d'un induit rotorique intérieur ou extérieur ou sous la forme d'un moteur linéaire.

9. Utilisation d'une machine électrique synchrone suivant la revendication 1, dans des machines outils, dans des machines de production ou dans des entraînements électriques de la technique de la circulation.
